# FASCICULE DE BREVET EUROPEEN

(11) **EP 3 732 080 B1**
(45) Date de publication et mention de la délivrance du brevet: **15.06.2022**
(21) Numéro de dépôt: 18796489.5
(22) Date de dépôt: 09.10.2018
(51) Int. Cl.: B60R 19/12, B60R 19/34, B60R 21/34

(54) **DISPOSITIF D'AMORTISSEMENT DE CHOC AVANT D'UN VÉHICULE AUTOMOBILE, COMPRENANT UN DÉFLECTEUR D'AIR BASCULANT ET UN AMORTISSEUR DÉFORMABLE FIXÉS L'UN À L'AUTRE**
FRONTAUFPRALLABSORPTONSVORRICHTUNG FÜR KRAFTFAHRZEUG MIT EINEM SCHWENKBAREN LUFTABLENKER UND EINEM VERFORMBAREN AUFPRALLABSORBER, DIE MITEINANDER VERBUNDEN SIND
MOTOR VEHICLE FRONT IMPACT ABSORPTION DEVICE COMPRISING A PIVOTING AIR DEFLECTOR AND A DEFORMABLE IMPACT ABSORBER CONNECTED TO ONE ANOTHER

(30) Priorité: 27.10.2017 FR 1760121
(43) Date de publication de la demande: 04.11.2020
(73) Titulaire: PSA Automobiles SA, 78300 Poissy (FR)
(72) Inventeur: GOUHINEC, Jean Paul, 78000 Versailles (FR); BOUDAN, Julien, 91210 Draveil (FR)
(86) Numéro de dépôt international: PCT/FR2018/052483
(87) Numéro de publication internationale: WO 2019/081830

(56) Documents cités:
- EP-A1- 1 799 517
- EP-A1- 1 813 485
- EP-A2- 1 238 862
- EP-A2- 1 433 664
- EP-A2- 1 757 489
- DE-A1-102007 019 481
- JP-A- 2001 010 424
- JP-A- 2004 203 183
- JP-A- 2006 111 249
- JP-A- 2006 273 212
- JP-A- 2009 220 662
- JP-A- 2011 168 174

## Description

La présente invention relève du domaine de la protection des équipements d'un véhicule automobile en cas de choc. L'invention relève plus spécifiquement d'un dispositif d'amortissement de choc avant subi par le véhicule, comprenant un amortisseur qui est monté sur un parechoc avant du véhicule et qui est déformable sous l'effet du choc.

Sur un véhicule automobile, divers équipements sont typiquement montés sur le châssis du véhicule à l'intérieur d'un compartiment moteur ménagé à l'avant du véhicule. De tels équipements comprennent notamment un groupe motopropulseur procurant la propulsion du véhicule, un système de refroidissement et/ou une réserve d'énergie électrique par exemple, et subsidiairement divers accessoires du véhicule.

Le véhicule est habillé d'un parechoc avant pour sa protection en cas de choc, et d'un déflecteur d'air inférieur avant qui ferme le compartiment moteur à la base du véhicule en participant de son aérodynamisme. Le parechoc s'étend transversalement à l'avant du véhicule pour le protéger des chocs qu'il subit. Le déflecteur d'air inférieur avant est globalement plan et s'étend au moins en partie sous le compartiment moteur.

Pour protéger les piétons en cas de choc avec le véhicule, il est connu de ménager sur le déflecteur inférieur avant une zone de fragilisation ou de le monter basculant sur le châssis via un déclencheur, tel qu'il ressort par exemple du document DE102006011774 (ISE AUTOMOTIVE GROUP & al.). Pour protéger le piéton du déflecteur en cas de choc piéton, le déflecteur est ainsi déformable de par sa fragilisation ou bascule vers le bas à l'avant du véhicule par suite d'une activation du déclencheur.

Il est aussi connu pour protéger les piétons en cas de choc piéton, de ménager à la base du parechoc avant un amortisseur déformable tel qu'il ressort par exemple du document EP1799517 (GM GLOBAL TECH OPERATIONS & al.). L'amortisseur est agencé en structure entretoisée par des nervures, et s'étend transversalement à l'avant du véhicule en étant fixé au parechoc avant par emboîtement élastique. En cas de choc piéton, l'amortisseur est ainsi configuré pour se déformer et absorber les efforts développés par le choc.

Le document JP2004203183 décrive également des moyens d'absorption de choc à l'avant d'un véhicule. Le document JP2009220662 décrit une fixation renforcée d'une grille d'entrée d'air sur un parechocs avant de véhicule. Le document EP1757489 décrit un moyen d'absorptions de choc comportant un déflecteur et un amortisseur fixé au véhicule, disposé derrière le parechocs. Les documents JP2011168174, qui correspond au préambule de la revendication 1, et JP2006273212 décrivent aussi un véhicule comportant en partie avant, sous le véhicule et derrière un parechoc, un dispositif se déformant en cas de choc.

Cependant dans ce contexte, les équipements et/ou les accessoires logés dans le compartiment moteur peuvent se trouver dégradés en cas de choc conséquent subi par le véhicule. En effet dans ce cas, l'amortisseur tend à être chassé vers l'arrière du véhicule avec pour conséquence éventuelle de heurter un équipement et/ou accessoire qui sont montés sur le châssis à l'arrière de l'amortisseur.

Il est dès lors opportun, en cas de choc subi par le véhicule, d'éviter un heurt entre l'amortisseur déformable et un équipement et/ou un accessoire du véhicule afin de le préserver. En effet, une dégradation de l'équipement et/ou de l'accessoire implique des réparations du véhicule qui peuvent être conséquentes, et donc coûteuses, ce qui induit un sentiment d'insatisfaction auprès de la clientèle.

Dans ce contexte, l'invention a pour objet un dispositif d'amortissement de choc avant configuré pour équiper un véhicule, et comprenant un amortisseur déformable sous l'effet d'un choc modéré subi par le véhicule. L'invention a aussi pour objet un véhicule automobile équipé d'un tel dispositif d'amortissement.

Un but de l'invention est de proposer un tel dispositif d'amortissement permettant de préserver au mieux un équipement et/ou un accessoire du véhicule situé à l'arrière de l'amortisseur déformable. Il est notamment visé de limiter les coûts de réparation du véhicule en cas de choc.

Un autre but de l'invention est de proposer à moindres coûts un tel dispositif d'amortissement qui soit efficace, dans le contexte d'une concurrence économique notoirement sévère dans le domaine automobile.

Il est si besoin précisé certaines notions relatives qui sont communément admises dans le domaine automobile pour décrire un véhicule automobile et/ou ses composants.

La notion d'extension longitudinale du véhicule est typiquement considérée entre l'avant et l'arrière du véhicule. Les notions avant et arrière sont des notions relatives classiquement identifiées selon la station du conducteur à bord du véhicule, qui fait face à la direction d'avancement vers l'avant du véhicule. Les notions transversal et vertical sont appréciées globalement perpendiculaires entre elles et à la notion de longitudinal. Le véhicule s'étend verticalement, ou autrement dit en élévation, perpendiculairement à son plan de roulage au sol. Par suite, les notions dessus et dessous et/ou inférieur et supérieur et/ou encore bas et haut, ou autres notions apparentées, sont des notions relatives typiquement considérées verticalement par rapport au plan de roulage du véhicule ménagé au bas du véhicule.

Les buts visés par la présente invention sont atteints isolément ou en combinaison par application des dispositions qui suivent.

Le dispositif d'amortissement de choc avant de la présente invention est configuré pour équiper un véhicule automobile et comprend les caractéristiques de la revendication 1.

Le dispositif d'amortissement comprend un amortisseur déformable qui est monté à la base d'un parechoc avant via au moins une première fixation. L'amortisseur est apte à se déformer sous l'effet d'un choc subi par le véhicule. Notamment, l'amortisseur s'étend essentiellement transversalement à l'avant du véhicule en étant par exemple agencé en structure alvéolaire et/ou entretoisée par des nervures sensiblement orientées verticalement par rapport au plan de roulage du véhicule.

Selon l'invention, le dispositif d'amortissement est principalement reconnaissable en ce qu'il comprend en outre un déflecteur inférieur avant globalement plan qui est monté sur le véhicule. Le déflecteur est monté sur le véhicule, notamment au moins au châssis à son extrémité arrière, en étant mobile vers le bas du véhicule sous l'effet d'un choc qu'il subit. Dans ce contexte, l'amortisseur et le déflecteur sont avantageusement fixés l'un à l'autre par au moins une deuxième fixation selon un deuxième seuil d'effort de fixation supérieur à un premier seuil d'effort de maintien en position de l'amortisseur sur le parechoc via la première fixation. L'amortisseur est monté à l'intérieur d'un logement ménagé par une paroi avant du déflecteur s'étendant en rehausse de son plan global d'extension. L'amortisseur est fixé au parechoc au moyen de la première fixation via le déflecteur.

Pour si besoin préciser, la notion de fixation et celle dépendante de sa fragilité ou inversement de sa robustesse par rapport à une autre fixation est identifiée non seulement par un ou plusieurs organes de fixation via lesquels de telles fixations sont réalisées entre au moins deux éléments, mais aussi par la structure et/ou de l'agencement desdits éléments dans l'environnement de leur fixation l'un à l'autre.

Autrement dit à titre indicatif pour apprécier la résistance à la déformation et/ou à la rupture d'une fixation entre au moins deux éléments, il est tenu compte de la résistance à la déformation et/ou à la rupture non seulement d'un ou plusieurs organes de fixation via lesquels est réalisée une telle fixation, mais aussi celles de la matière dont sont issus les éléments dans leur zone de fixation l'un à l'autre.

Une telle fixation entre au moins deux éléments peut par exemple être du type par rivetage via au moins un organe de fixation agencé en rivet, ou être du type par filetage via au moins un organe de fixation fileté, tel qu'une vis ou un boulon, ou encore du type par emboîtement et plus spécifiquement du type par emboîtement élastique ou du type par encastrement via au moins un jeu d'organes de fixation de formes complémentaires coopérant entre eux par emboîtement.

Une telle approche de la notion de fixation est courante dans les domaines relevant de l'assemblage entre au moins deux dits éléments et est communément comprise dans le domaine automobile, notamment dans le contexte de l'invention.

Il est considéré un cas de choc conséquent subi par le véhicule, d'une ampleur suffisante pour produire une déformation de la partie avant du véhicule et provoquer ladite mobilité du déflecteur vers le bas du véhicule. Dans ce cas, le déflecteur entraîne l'amortisseur vers le bas du véhicule par suite de sa mobilité et de sa fixation robuste avec l'amortisseur via la deuxième fixation, en provoquant au moins une déformation voire une rupture de la première fixation.

Il est encore considéré une situation courante du véhicule, c'est-à-dire en l'absence de choc qu'il est susceptible de subir, dans laquelle un équipement et/ou un accessoire sont classiquement installés à l'arrière proche de l'amortisseur compte tenu de l'environnement encombré du compartiment moteur. En cas de dit choc conséquent subi par le véhicule, l'équipement et/ou l'accessoire sont alors préservés d'une dégradation par l'amortisseur par suite de son entraînement vers le bas du véhicule par le déflecteur.

Le dit équipement est notamment un organe, tel qu'un échangeur de chaleur, que comprend un système de refroidissement équipant le véhicule et couramment placé à l'arrière du parechoc avant. Il est cependant compris que l'invention est applicable à la protection d'un quelconque équipement et/ou accessoire du véhicule installé à l'arrière proche de l'amortisseur.

Selon une forme de réalisation, la deuxième fixation est réalisée au moins par un organe de fixation fileté. Un tel organe fileté est réputé apte à procurer une fixation robuste entre les éléments qu'il fixe l'un à l'autre, et est notamment configuré pour procurer une résistance à la rupture de la deuxième fixation soumise à un effort au moins égal audit deuxième seuil d'effort.

L'organe fileté est de préférence agencé en vis pour simplifier les modalités de fixation et/ou le processus de montage sur le véhicule de l'amortisseur, du déflecteur et/ou du parechoc. L'élément fileté peut par exemple encore être néanmoins agencé en boulon ou en tout autre organe apte à procurer ladite fixation robuste entre le déflecteur et l'amortisseur.

Selon une forme de réalisation, susceptible d'être considérée isolément ou en combinaison avec ledit organe de fixation fileté, la deuxième fixation comprend une jonction par encastrement entre l'amortisseur et le déflecteur.

Un tel encastrement est notamment réalisé par emboîtement, de préférence monodirectionnel, entre des éléments de formes complémentaires que comportent respectivement le déflecteur et l'amortisseur. Les éléments de formes complémentaires sont configurés en organes d'emboîtement du déflecteur et de l'amortisseur aptes à les maintenir l'un à l'autre au moins au dit deuxième seuil d'effort de fixation.

Plus particulièrement, la jonction par encastrement entre l'amortisseur et le déflecteur est réalisée via un emboîtement entre des éléments de formes complémentaires que comportent respectivement le déflecteur et l'amortisseur, par approche du déflecteur longitudinalement vers l'arrière de l'amortisseur ou autrement dit suivant un sens longitudinal d'emboîtement vers l'avant.

Un tel emboîtement longitudinal a pour effet de conforter la robustesse de la jonction entre le déflecteur et l'amortisseur à l'encontre de l'effort résistant produit par la première de fixation, en évitant de complexifier lesdits éléments de formes complémentaires et/ou de leur conférer un volume encombrant. En outre, un tel emboîtement longitudinal réalisé depuis l'arrière vers l'avant du véhicule, permet de faciliter le processus de montage sur le véhicule du parechoc, du déflecteur et de l'amortisseur, au regard de leurs positions relatives sur le véhicule et/ou de leur installation et des modalités de leur assemblage sur le véhicule.

Selon une forme de réalisation, la première fixation est du type par emboîtement élastique comprenant au moins un élément élastiquement déformable.

Selon une forme de réalisation, en substitution ou en complément d'un agencement élastiquement déformable de la première fixation, la première fixation est du type par rivetage, comprenant au moins un rivet. Le rivet est notamment structuré en organe déformable et/ou ruptible, c'est-à-dire apte à être rompu, audit premier seuil d'effort.

Selon une forme de réalisation, le déflecteur est monté sur le véhicule via chacune de ses extrémités longitudinales. Le déflecteur est apte à entraîner l'amortisseur via la deuxième fixation sous l'effet d'un choc subi par le véhicule, indifféremment par déformation du déflecteur dans son plan global et/ou par déformation, et/ou par rupture, d'une troisième fixation de montage de l'extrémité arrière du déflecteur sur le châssis du véhicule qui provoque alors un basculement du déflecteur via son extrémité avant.

Autrement dit le déflecteur est monté sur le véhicule en étant apte à se déformer et/ou à basculer sous l'effet d'un choc conséquent subi par le véhicule. La déformation et/ou le basculement du déflecteur provoque alors une déformation ou une rupture de la première fixation et l'entraînement de l'amortisseur via la deuxième fixation vers le bas du véhicule. Le basculement du déflecteur est réalisé via son extrémité avant, de sorte que son extrémité arrière chute vers le bas du véhicule par déformation et/ou rupture de la troisième fixation.

Bien évidemment, la déformation ou le basculement du déflecteur, et la déformation ou la rupture de la troisième fixation, sont respectivement provoqués selon la puissance du choc subi par le véhicule. La déformation du déflecteur est provoquée à une puissance de choc inférieure à celle provoquant la déformation ou la rupture de la troisième fixation et par suite le basculement du déflecteur.

L'invention a aussi pour objet un véhicule automobile équipé d'un dispositif d'amortissement conforme à l'invention.

Plus particulièrement, le dispositif d'amortissement est organisé sur le véhicule en étant apte à autoriser une dite mobilité du déflecteur d'entraînement de l'amortisseur via la deuxième fixation vers le bas du véhicule sous l'effet dudit choc. La mobilité du déflecteur est organisée sur le véhicule à partir d'une structure du déflecteur et de son montage sur le véhicule qui autorise, sous l'effet du dit choc, une déformation du déflecteur et/ou son basculement vers le bas du véhicule.

Le montage basculant du déflecteur sur le véhicule est de préférence réalisé via son extrémité avant, son extrémité arrière chutant vers le bas du véhicule par suite de la déformation et/ou de la rupture du troisième organe de fixation.

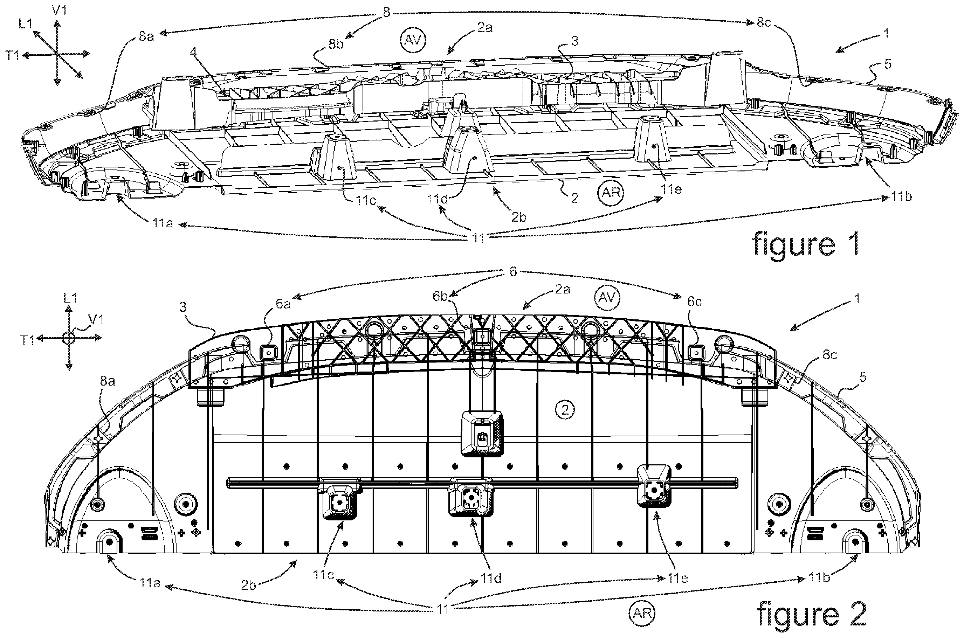

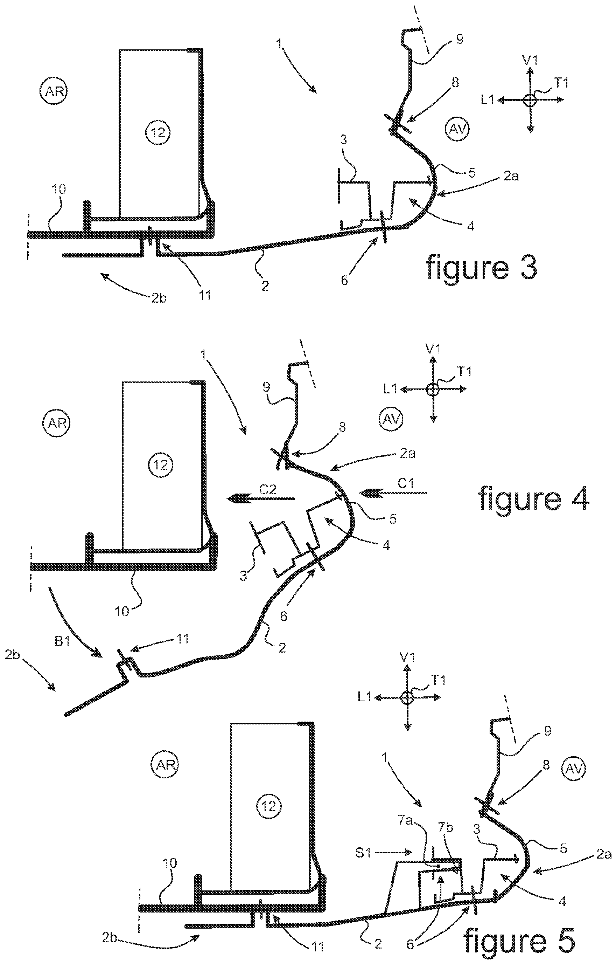

Des exemples de réalisation de la présente invention vont être décrits en relation avec les figures des planches annexées, dans lesquelles :
- ) la figure 1 et la figure 2 sont des illustrations respectivement en perspective et en vue de plan d'un déflecteur inférieur avant pour un véhicule automobile, sur lequel déflecteur est fixé un amortisseur conformément à un exemple de réalisation d'un dispositif d'amortissement de l'invention,
- ) la figure 3 et la figure 4 sont des représentations schématiques d'un exemple de réalisation d'un dispositif d'amortissement de l'invention monté sur le véhicule, illustrant successivement des modalités de son fonctionnement,
- ) la figure 5 est une représentation schématique d'un autre exemple de réalisation d'un dispositif d'amortissement de l'invention monté sur le véhicule.

Les figures et leurs descriptions détaillées exposent l'invention selon des modalités particulières qui ne sont pas restrictives quant à la portée de l'invention telle que définie par les revendications. Les figures et leurs descriptions détaillées peuvent servir à mieux définir l'invention, si besoin en relation avec la description générale qui vient d'en être faite.

Sur les figures 1 à 5, les notions relatives utilisées pour décrire l'invention sont appréciées au regard d'un repère orthonormé défini par une direction longitudinale L1, une direction transversale T1 et une direction verticale V1. Un tel repère orthonormé est couramment utilisé dans le domaine automobile pour définir le véhicule et/ou ses composants, tel que précédemment indiqué.

Sur les figures 1 à 5, un dispositif d'amortissement 1 conforme à l'invention comprend un déflecteur 2 inférieur avant et un amortisseur 3. Le déflecteur 2 est globalement plan (T1-L1) et s'étend transversalement T1 à l'avant AV du véhicule, essentiellement sous le compartiment moteur du véhicule. L'amortisseur 3 est classiquement structuré en organe alvéolaire apte à absorber par déformation un choc piéton subi par le véhicule, de plus faible ampleur qu'un choc du véhicule contre un obstacle robuste, voire fixe, provoquant l'escamotage de l'amortisseur 3 vers le bas du véhicule comme illustré sur la figure 4.

L'amortisseur 3 est disposé à l'avant du déflecteur 2, en étant de préférence installé à l'intérieur d'un logement 4 du déflecteur 2. Le logement 4 est ménagé par une paroi 5 avant du déflecteur 2 qui le rehausse par rapport à son plan (T1-L1) global d'extension. L'amortisseur 3 est fixé de manière robuste au déflecteur 2 à sa face supérieure, via une deuxième fixation 6 comprenant plusieurs deuxièmes organes de fixation 6a, 6b, 6c répartis au moins transversalement sur le déflecteur 2 et sur l'amortisseur 3.

Sur les figures 3 et 4, la deuxième fixation 6 est du type par vissage. Sur la figure 5, la deuxième fixation 6 est du type par encastrement, voire aussi par vissage tel qu'illustré. Un tel encastrement est réalisé par emboîtement d'éléments 7a, 7b de formes complémentaires coopérant entre eux équipant respectivement le déflecteur 2 et l'amortisseur 3. L'encastrement est réalisé à partir d'un emboîtement longitudinal L1 entre les éléments 7a, 7b de formes complémentaires, par approche du déflecteur 2 longitudinalement L1 vers l'arrière de l'amortisseur 3, suivant un sens S1 d'emboîtement longitudinal vers l'avant AV du déflecteur 2 avec l'amortisseur 3.

Selon l'exemple de réalisation représenté sur les figures 1 à 5, le déflecteur 2 est fixé via une première fixation 8 à la base d'un parechoc 9 avant du véhicule, comme illustré sur les figures 3 à 5. La première fixation 8 est ménagée à l'extrémité avant 2a du déflecteur 2 et comprend plusieurs premiers org anes de fixation répartis transversalement sur le déflecteur 2 et sur le parechoc 8, tels qu'à titre indicatif les premiers organes de fixation référencés 8a, 8b, 8c sur les figures 1 et 2. La première fixation 8 est par exemple du type à emboîtement élastique entre le déflecteur 2 et le parechoc 9, et/ou du type par rivetage.

Le déflecteur 2 est par ailleurs fixé à son extrémité arrière 2b au châssis 10 du véhicule via une troisième fixation 11, comme illustré pour exemple sur les figures 3 à 5. La troisième fixation 11 comprend plusieurs troisièmes organes de fixation répartis au moins transversalement sur le déflecteur 2 et sur le châssis 10, tels qu'à titre indicatif les troisièmes organes de fixation référencés 11a à 1 1e sur la figure 1. La troisième fixation 11 est notamment du type par vissage ou par boulonnage.

On comprendra que le montage du déflecteur 2 sur le châssis 10 à son extrémité arrière 2b est susceptible d'être réalisée directement par la troisième fixation 11 ou indirectement via au moins un organe intermédiaire fixé au châssis et sur lequel est monté le déflecteur 2 au moyen de la troisième fixation 11.

Sur les figures 3 et 5, un équipement 12 est installé sur le châssis 10 à l'arrière AR proche de l'amortisseur 3 en situation courante du véhicule c'est-à-dire lorsqu'il n'est pas soumis à un choc conséquent.

Sur la figure 4 en cas de choc C1 conséquent subi par le véhicule contre un obstacle robuste, voire fixe, l'amortisseur tend à être chassé vers l'arrière AR du véhicule en direction de l'équipement 12, suivant l'orientation d'une composante de poussée longitudinale C2 d'un effort de poussée exercé contre le véhicule par l'obstacle. Pour éviter de dégrader l'équipement 12, le dispositif d'amortissement 1 tel que précédemment décrit est configuré pour escamoter l'amortisseur 3 vers le bas du véhicule et ainsi interdire un contact entre l'amortisseur 3 et l'équipement 12 qu'il est utile de protéger.

Dans ce cas, l'amortisseur 3 est entraîné vers le bas du véhicule par le déflecteur 2 via la deuxième fixation 6. Plus particulièrement à un premier seuil d'effort prédéterminé, la première fixation 8 est dégradée et le déflecteur 2 au moins se déforme. Une telle déformation du déflecteur 2 est apte à provoquer l'entraînement de l'amortisseur 3 vers le bas du véhicule, la deuxième fixation 6 étant résistante à un deuxième seuil d'effort supérieur au premier seuil d'effort.

Selon l'ampleur du choc subi par le véhicule, le déflecteur 2 est aussi susceptible d'être entraîné en basculement B1 vers le bas du véhicule en étant retenu sur le véhicule via son extrémité avant 2a de sorte que son extrémité arrière 2b chute de vers le bas du véhicule.

La potentialité d'une chute de l'extrémité arrière 2b du déflecteur 2 résulte d'une éventuelle rupture de la troisième fixation 11 sous l'effet de la contrainte supportée par le déflecteur 2. Par analogie dans le cas où le déflecteur 2 est fixé à son extrémité arrière 2b au châssis 10 via un dit organe intermédiaire, une telle chute est aussi susceptible d'être provoquée par suite d'une potentielle dégradation d'une fixation dudit organe intermédiaire sur le châssis 10.

## Revendications

1. Dispositif d'amortissement (1) de choc avant configuré pour équiper un véhicule automobile, le dispositif d'amortissement (1) comprenant un parechoc (9), un amortisseur (3) déformable qui est monté à la base d'un parechoc (9) avant via au moins une première fixation (8), amortisseur (3) qui est apte à se déformer sous l'effet d'un choc subi par le véhicule, le dispositif d'amortissement (1) comprenant en outre un déflecteur (2) inférieur avant globalement plan (L1-T1) qui est monté sur le véhicule en étant mobile vers le bas du véhicule sous l'effet d'un choc qu'il subit, l'amortisseur (3) et le déflecteur (2) étant fixés l'un à l'autre par au moins une deuxième fixation (6) selon un deuxième seuil d'effort de fixation supérieur à un premier seuil d'effort de maintien en position de l'amortisseur (3) sur le parechoc (9) via la première fixation (8), **caractérisé en ce que** l'amortisseur (3) est monté à l'intérieur d'un logement (4) ménagé par une paroi (5) avant du déflecteur (2) s'étendant en rehausse de son plan (L1-T1) global d'extension, l'amortisseur (3) étant fixé au parechoc (9) au moyen de la première fixation (8) via le déflecteur (2).

2. Dispositif d'amortissement (1) selon la revendication 1, **caractérisé en ce que** la deuxième fixation (6) est réalisée au moins par un organe de fixation (7a-7c) fileté.

3. Dispositif d'amortissement (1) selon l'une quelconque des revendications 1 et 2, **caractérisé en ce que** la deuxième fixation (6) comprend une jonction par encastrement (7a, 7b) entre l'amortisseur (3) et le déflecteur (2).

4. Dispositif d'amortissement (1) selon la revendication 3, **caractérisé en ce que** la jonction par encastrement entre l'amortisseur (3) et le déflecteur (2) est réalisée via un emboîtement entre des éléments (7a, 7b) de formes complémentaires que comportent respectivement le déflecteur (2) et l'amortisseur (3), par approche du déflecteur (2) longitudinalement vers l'arrière de l'amortisseur (3).

5. Dispositif d'amortissement (1) selon l'une quelconque des revendications 1 à 4, **caractérisé en ce que** la première fixation (8) est du type par emboîtement élastique comprenant au moins un élément élastiquement déformable.

6. Dispositif d'amortissement (1) selon l'une quelconque des revendications 1 à 5, **caractérisé en ce que** la première fixation (8) est du type par rivetage comprenant au moins un rivet.

7. Dispositif d'amortissement (1) selon l'une quelconque des revendications 1 à 6, **caractérisé en ce que** le déflecteur (2) est apte à être monté sur le véhicule via chacune de ses extrémités (2a, 2b) longitudinales en étant apte à entraîner l'amortisseur (3) via la deuxième fixation (6) sous l'effet d'un choc subi par le véhicule, indifféremment par déformation du déflecteur (2) et/ou par déformation, et/ou rupture, d'une troisième fixation (11) de montage de l'extrémité arrière (2b) du déflecteur (2) sur le châssis (10) du véhicule provoquant un basculement (B1) du déflecteur (2) via son extrémité avant (2a).

8. Véhicule automobile équipé d'un dispositif d'amortissement (1) selon l'une quelconque des revendications précédentes.

9. Véhicule automobile selon la revendication 8, **caractérisé en ce que** le dispositif d'amortissement (1) est organisé sur le véhicule en étant apte à autoriser une dite mobilité du déflecteur (2) d'entraînement de l'amortisseur (3) via la deuxième fixation (6) vers le bas du véhicule sous l'effet dudit choc, à partir d'une structure du déflecteur (2) et de son montage sur le véhicule autorisant, sous l'effet du dit choc, une déformation du déflecteur (2) et/ou son basculement (B1) vers le bas du véhicule.

## Patentansprüche

1. Frontstoßdämpfungsvorrichtung (1) zur Ausrüstung eines Kraftfahrzeuges, wobei die Dämpfungsvorrichtung (1) einen Stoßdämpfer (9), einen verformbaren Dämpfer (3) aufweist, der an der Basis eines vorderen Stoßdämpfers (9) über mindestens eine erste Halterung (8) angebracht ist, wobei der Stoßdämpfer (3) durch einen Aufprall des Kraftfahrzeuges verformbar ist, die Vorrichtung Dämpfungsvorrichtung (1), die ferner einen unteren, im Wesentlichen ebenen vorderen Deflektor (2) aufweist, der an dem Fahrzeug unter Einwirkung eines Aufpralls nach unten bewegbar angebracht ist, wobei der Dämpfer (3) und der Deflektor (2) durch mindestens eine zweite Halterung (6) gemäß einer zweiten Schwelle der oberen Befestigungskraft an einer ersten Schwelle aneinander befestigt sind Haltekraft des Dämpfers (3) auf dem Parechoc (9) über die erste Halterung (8), **dadurch gekennzeichnet, dass** der Dämpfer (3) innerhalb einer Aufnahme (4) gelagert ist, die durch eine vordere Wand (5) des Deflektors (2) gebildet ist, die sich nach oben zu seiner gesamten Ausdehnungsfläche (L1-T1) erstreckt, wobei der Dämpfer (3) befestigt ist dem Parechoc (9) mittels der ersten Befestigung (8) über den Deflektor (2).

2. Dämpfungsvorrichtung (1) nach Anspruch 1, **dadurch gekennzeichnet, dass** die zweite Halterung (6) zumindest durch ein Befestigungselement (7a-7c) mit Gewinde ausgebildet ist.

3. Dämpfungsvorrichtung (1) nach einem der Ansprüche 1 und 2, **dadurch gekennzeichnet, dass** die zweite Halterung (6) eine Einsteckverbindung (7a, 7b) zwischen dem Dämpfer (3) und der Ablenkplatte (2) aufweist.

4. Dämpfungsvorrichtung (1) nach Anspruch 3, **dadurch gekennzeichnet, dass** die Einsteckverbindung zwischen Dämpfer (3) und Deflektor (2) über eine Steckverbindung zwischen Elementen (7a, 7b) komplementärer Formen, die jeweils der Deflektor (2) und der Dämpfer (3) aufweisen, durch Annäherung des Deflektors (2) in Längsrichtung zur Rückseite des Dämpfers (3) erfolgt.

5. Dämpfungsvorrichtung (1) nach einem der Ansprüche 1 bis 4, **dadurch gekennzeichnet, dass** die erste Halterung (8) vom Typ eines elastischen Steckverbinders ist, der mindestens ein elastisch verformbares Element umfasst.

6. Dämpfungsvorrichtung (1) nach einem der Ansprüche 1 bis 5, **dadurch gekennzeichnet, dass** die erste Befestigung (8) vom Niettyp ist, der mindestens einen Niet umfasst.

7. Dämpfungsvorrichtung (1) nach einem der Ansprüche 1 bis 6, **dadurch gekennzeichnet, dass** der Deflektor (2) über jedes seiner Längsenden (2a, 2b) an dem Fahrzeug angebracht werden kann, indem er den Dämpfer (3) über die zweite Halterung (6) unter dem Einfluss eines Fahrzeugaufpralls antreiben kann, wobei das Deflektor (2) und/oder durch Verformung und/oder Bruch einer dritten Halterung (11) zur Befestigung des hinteren Endes (2b) des Deflektors (2) am Fahrzeugchassis (10), die ein Kippen (B1) des Deflektors (2) über sein vorderes Ende (2a) bewirkt.

8. Kraftfahrzeug mit einer Dämpfungsvorrichtung (1) nach einem der vorhergehenden Ansprüche.

9. Kraftfahrzeug nach Anspruch 8, **dadurch gekennzeichnet, dass** die Dämpfungseinrichtung (1) am Fahrzeug so angeordnet ist, dass sie eine solche Beweglichkeit des Stoßdämpferantriebs (2) über die zweite Befestigung (6) des Fahrzeugs unter dem Einfluss des Aufpralls aus einer Struktur des Stoßdämpfers (2) und seiner Montage am Fahrzeug ermöglicht, die unter dem Einfluss des Aufpralls erlaubt, eine Verformung des Deflektors (2) und/oder dessen Kippen (B1) nach unten des Fahrzeugs.

## Claims

1. Depreciation device (1) for a front impact device configured to equip a motor vehicle, the damping device (1) comprising a parecmatter (9), a deformable shock absorber (3) which is mounted at the base of a forward shock absorber (9) through at least a first fixation (8), damper (3) which is capable of deforming itself as a result of a shock suffered by the vehicle, the device damping (1) also comprising a lower front deflector (2), lower overall plane (L1-T1), which is mounted on the vehicle by moving downward from the vehicle as a result of a shock, the shock absorber (3) and the deflector (2) being attached to each other by at least a second attachment (6) at a second level of attachment effort above a first pressure threshold for holding the damper (3) on the parecmatter (9) via the first fixation (8), **characterized by** the damper (3) being mounted inside a housing (4) housed by a wall (5) before the deflector (2) extending upwards of its overall expansion plane (L1-T1), the damper (3) fixed to the parecmatter (9) by means of the first fixing (8) via the deflector 2.

2. Depreciation device (1) according to Claim 1, characterized that the second fixation (6) is performed by at least one attachment device (7a-7c) threaded.

3. Depreciation device (1) according to any of claims 1 and 2, characterized as the second attachment (6) includes a junction by underrun (7a, 7b) between the damper (3) and the deflector (2).

4. Depreciation device (1) according to Claim 3, **characterized in that** the connection by insert between the damper (3) and the deflector (2) is made by means of a socket between elements (7a, 7b) of complementary shapes contained in the deflector (2) and the damper (3), respectively, by approach of the deflector (2) longitudinal towards the rear of the damper (3).

5. Depreciation device (1) according to any of the claims 1 to 4, **characterized by** the fact that the first fixation (8) is of the type by elastic embossing including at least one elastically deformable element.

6. Depreciation device (1) according to any of the claims 1 to 5, **characterized by** the fact that the first fixation (8) is of the type by riveting including at least one riveting.

7. Depreciation device (1) according to any of the claims 1 to 6, characterized as the deflector (2) is capable of being mounted on the vehicle through each of its longitudinal ends (2a, 2b) and capable of driving the damper (3) through the second attachment (6) as a result of a shock suffered by the vehicle, regardless of deformation of the deflector (2) and/or by deformation, and/or rupture, of a third attachment (11) of mounting of the rear end (2b) of the deflector (2) on the chassis (10) of the vehicle causing the deflector (2) to fail (B1) through its front end (2a).

8. Motor vehicle equipped with a damping device (1) according to any of the previous claims.

9. Motor vehicle according to claim 8, **characterized in that** the damping device (1) is organized on the vehicle by being able to permit so-called mobility of the deflector (2) to drive the damper (3) through the second attachment (6) to the bottom of the vehicle as a result of the said shock, from a structure of the deflector (2) and its mounting on the vehicle authorizing, under the effect of the said shock of the said shock, a deflector deformation (2) and/or its tilting (B1) downward from the vehicle.
